# EUROPEAN PATENT SPECIFICATION

(11) **EP 3 866 491 B1**
(45) Date of publication and mention of the grant of the patent: **02.09.2026**
(21) Application number: 21164484.4
(22) Date of filing: 08.12.2016
(51) Int. Cl.: H04R 25/00

(54) **METHOD OF REMOTE CONFIGURATION OF A HEARING DEVICE, SERVER DEVICE AND HEARING SYSTEM**
VERFAHREN ZUR FERNKONFIGURATION EINES HÖRGERÄTS, SERVER-VORRICHTUNG UND HÖRSYSTEM
PROCÉDÉ DE CONFIGURATION À DISTANCE D'UN DISPOSITIF AUDITIF, DISPOSITIF SERVEUR ET SYSTÈME AUDITIF

(43) Date of publication of application: 18.08.2021
(62) Document number(s) of the earlier application(s) in accordance with Art. 76 EPC: 16202916.9 / 3 334 187
(73) Proprietor: GN Hearing A/S, 2750 Ballerup (DK)
(72) Inventor: VENDELBO, Allan Munk, DK-2750 Ballerup (DK)
(74) Representative: GN Store Nord A/S

(56) References cited:
- US-A1- 2010 205 447
- US-A1- 2011 257 994
- US-A1- 2012 183 164
- US-A1- 2014 211 972
- US-A1- 2016 173 278
- "Modern Hearing Aids: Verification, outcome measures, and follow-up", 30 March 2014, PLURAL PUBLISHING, San Diego, USA, ISBN: 978-1-59756-482-3, ISSN: 1740-701X, article RUTH BENTLER ET AL: "Modern Programming of Hearing Aids", pages: 151 - 170, XP055668890
- "Cryptography and Network Security", 1 November 2014, PHI LEARNING PRIVATE LIMITED, Delhi, ISBN: 978-81-20-35045-8, article GUPTA PRAKASH C: "section 13.6 Symmetric-Key Challenge-Response Authentication Schemes", pages: 1 - 480, XP093059919
- "Symmetric Cryptographic Protocols", 19 August 2014, SPRINGER INTERNATIONAL PUBLISHING, Cham, ISBN: 978-3-319-07584-6, article RAMKUMAR MAHALINGAM: "Chapter 3 - Nonscalable Key Distribution Schemes", pages: 1 - 243, XP093060103
- "Symmetric Cryptographic Protocols", 1 January 2014, SPRINGER INTERNATIONAL PUBLISHING, Cham, ISBN: 978-3-319-07584-6, article RAMKUMAR MAHALINGAM: "Chapter 5 Scalable Key Distribution Schemes", pages: 1 - 520, XP093311715, DOI: 10.1007/978-3-319-07584-6

## Description

The present disclosure relates to a hearing system comprising a server device, a hearing device, a fitting device and an accessory device. In particular, the present disclosure relates to methods, performed at a server device, for securing remote configuration of the hearing device, and related server devices.

### BACKGROUND

Wireless communication to and from different entities of a hearing system has been increasing in continuation of the developments within wireless communication technology. However, the new technologies entail new challenges for the hearing aid manufacturers in order to secure communication in a hearing system. Wireless communication interfaces of a hearing system desirably use an open standard-based interface. However, this poses many challenges in terms of security. Further, a hearing device is a very small device with strict constraints in terms of computational power, memory space etc. US 20160173278A1 describes that a hearing device includes: a processing unit configured to compensate for hearing loss of a user of the hearing device; and an interface; wherein the processing unit is configured to: receive a session request for a session via the interface, obtain and store a session key, encrypt the session key based on a hearing device key, send a session response comprising the encrypted session key to a client device, and receive session data in the session via the interface. Paragraph [68] of US 2016173278A1 provides: The hearing device may alternatively send to the client device a session response encrypted with the hearing device key, the session response comprising the session key. The client device receiving the session response may request the server device to decrypt the encrypted session key comprised in the session response, or to decrypt the encrypted session response. Based on the request, the server device may send the decrypted session key in a response to the client device . This may be when the hearing device key used at the hearing device is a public key of a private-public key pair of the server. When the hearing device key is a symmetric key. the server device may send the decrypted session key in a response to the client device or send the hearing device key in the response to the client device which is then capable of decrypting the session key or the session response. The response may comprise the decrypted session key or the hearing device key. The communication link between the client device and the server device is secure, i.e. authenticated, encrypted and/or integrity protected using a security protocol (e.g. Transport Layer Security protocol). The hearing device receives from the client device session data in the session via the interface. The session data may then be encrypted and/ or integrity-protected at the client device, e.g. by use of the session key.

### SUMMARY

There is a need for fitting devices, server devices and methods for providing improved and effective security supporting a remote configuration of the hearing device, such as a remote fitting or a remote fine tuning of the hearing device. Further, there is a need for devices and methods reducing the risk of configuration data being compromised by a third (unauthorized) party. The invention is set out in the appended set of claims.

It is an important advantage of the present disclosure that secure remote configuration of the hearing device is provided while at the same time considering the limited computational power of a hearing device. Thus, effective and secure remote configuration of the hearing device is provided.

### BRIEF DESCRIPTION OF THE DRAWINGS

The above and other features and advantages of the present invention will become readily apparent to those skilled in the art by the following detailed description of exemplary embodiments thereof with reference to the attached drawings, in which:
- Fig. 1: schematically illustrates a hearing system,
- Fig. 2: is a flow diagram of an exemplary non-claimed method performed at a fitting device useful for the understanding of the invention according to this disclosure,
- Fig. 3: is a flow diagram of an exemplary method performed at a server device according to this disclosure,
- Fig. 4: schematically illustrates an exemplary configuration package, and an exemplary configuration verification package according to this disclosure,
- Fig. 5: schematically illustrates an exemplary configuration authentication package according to this disclosure,
- Fig. 6: schematically illustrates an exemplary signaling diagram between a fitting device, a server device, an accessory device and a hearing device according to this disclosure,
- Fig. 7: schematically illustrates an exemplary non-claimed fitting device useful for the understanding of the invention according to this disclosure, and
- Fig. 8: schematically illustrates an exemplary server device according to this disclosure.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

The present disclosure relates to an improved security in remotely configuring a hearing device in a hearing system. The hearing system comprises a server device, a hearing device and a fitting device. The fitting device is controlled by a dispenser. The server device may be controlled by the hearing device manufacturer. The server device may be a distributed server device, i.e. a server device with distributed processors. Namely, the methods, fitting devices and server devices disclosed herein enable a remote configuration of the hearing device by the fitting, where the remote configuration is robust against security threats, vulnerabilities and attacks by implementing appropriate safeguards and countermeasures, such as security mechanisms, to protect against threats and attacks. The present disclosure relates to a method for remote configuration of a hearing device, which is robust against replay attacks, unauthorized access, battery exhaustion attacks, and man-in-the-middle attacks.

The present disclosure addresses a problem that is encountered by dispensers and hearing device users. This can be illustrated in the following example. A hearing device user calls a dispenser (e.g. from home) and complains about the configuration or fitting done earlier at the professional dispenser's office. The dispenser should be able to adjust certain configuration values (e.g. +3db gain at 1 kHz) in the office and send the resulting configuration package - or fine tuning package - to the hearing device or an accessory having an application installed thereon to handle the hearing device. The hearing device user is able to use the application to download the configuration package and apply it to the hearing device. However, such a retrieval of the configuration package shall be secured, the configuration package shall be integrity protected, and the entire chain of processing leading to the installation of the configuration package on the hearing device shall be confidential, authenticated and integrity protected.

The fitting device comprises a memory unit and an interface respectively connected to a processing unit. The memory unit may include removable and non-removable data storage units including, but not limited to, Read Only Memory (ROM), Random Access Memory (RAM), etc. The fitting device is configured to control and/or configure the hearing device. The interface comprises an antenna and a wireless transceiver, e.g. configured for wireless communication at frequencies in the range from 2.4 to 2.5 GHz. The interface may be configured for communication, such as wireless communication, with the hearing device comprising an antenna and a wireless transceiver, and with the server device.

The present disclosure relates to hearing system communication between entities of a hearing system. The accessory device forms an accessory device to the hearing device. The accessory device is typically paired or otherwise wirelessly coupled to the hearing device. The hearing device may be a hearing aid, e.g. of the behind-the-ear (BTE) type, in-the-ear (ITE) type, in-the-canal (ITC) type, receiver-in-canal (RIC) type or receiver-in-the-ear (RITE) type. Typically, the hearing device system is in possession of and controlled by the hearing device user. The accessory device may be a smartphone, a smartwatch, or a tablet computer.

As used herein the term "identifier" refers to a piece of data that is used for identifying, such as for categorizing, and/or uniquely identifying. The identifier may be in a form of a word, a number, a letter, a symbol, a list, an array or any combination thereof. For example, the identifier as a number may be in the form of an integer, such as unsigned integer, uint, with a length, or more, such as an array of unsigned integers. An identifier may have a length of several bytes. For example, a hearing device identifier may have a length of 10-30 bytes, such as 20 bytes.

The present disclosure relates to a non-claimed method performed at a fitting device of a hearing system which is useful for the understanding of the invention. The method for remotely configuring a hearing device in the hearing system, the hearing system comprising the hearing device, the fitting device, and a server device is provided. The method comprises obtaining hearing device data. The hearing device data comprises a hearing device identifier of the hearing device to be remotely configured by the fitting device. In one or more exemplary methods, obtaining hearing device data comprises obtaining or retrieving the hearing device data from a database remote from the fitting device. The hearing device data comprises a hearing device identifier of the hearing device. The hearing device identifier may refer to a unique device identifier. The hearing device identifier may comprise a hardware number, a serial number, a MAC address. In one or more exemplary methods, the hearing device data may comprise a shared index, a fitting device key identifier, an address identifier (such as a Bluetooth address), and/or fitting information. A shared index supports in identifying a common secret shared with a hearing device, thereby provides an optimization of use of payload. An address identifier may have a length of 2-10 bytes, such as 5 bytes, such as 6 bytes. A shared index may have a length of 1 byte. A fitting device key identifier may have a length between 1 and 3 bytes, such as 2 bytes.

One or more exemplary methods comprises obtaining a session key. Obtaining a session key may comprise generating a session key e.g. as a random or pseudo-random number. The session key may be uniquely generated for each session. The session key may be a symmetric key. A symmetric session key may provide a lightweight processing of the security algorithms on the processing unit, such as lightweight encryption, lightweight decryption, lightweight integrity protection, etc. The session key may have a length between 10 bytes and 20 bytes, such as between 15 and 20 bytes, such as 16 bytes.

One or more exemplary methods comprises obtaining a session counter. Obtaining a session counter may comprise generating a session counter e.g. as a random or pseudo-random number. The session counter may have a length between 10 bytes and 20 bytes, such as between 15 and 20 bytes, such as 16 bytes.

One or more exemplary methods comprises generating a configuration initiation request based on the session key and the hearing device identifier. For example, generating the configuration initiation request may comprise encrypting the session key using a configuration initiation public key, and including the encrypted session key in the configuration initiation request. In one or more exemplary methods, generating the configuration initiation request may comprise encrypting the session key and the session counter by e.g. encrypting the session key, the session counter and a part of the hearing device data (e.g. a shared index, a fitting device key identifier) using the configuration initiation public key. The encryption may be based on RSA crypto-system or any other encryption system.

One or more exemplary methods comprises transmitting the configuration initiation request to the server device. The configuration initiation request may comprise the session key, the hearing device identifier, and optionally part of the hearing device data (e.g. the shared index), and optionally the session counter. The configuration initiation request may be encrypted using the configuration initiation public key prior to transmission.

One or more exemplary methods comprises receiving a configuration initiation response from the server device, the configuration initiation response comprising configuration keying material. In one or more exemplary methods, receiving the configuration initiation response comprises decrypting the configuration keying material. For example, the configuration keying material may be decrypted using the session key. The configuration keying material may comprise a configuration key (such as a symmetric), and possibly a configuration keying counter.

One or more exemplary methods comprises generating a configuration package based on configuration data for the hearing device and based on the configuration keying material. The configuration package may comprise configuration package data. The configuration data may comprise data related to the hearing device. The data related to the hearing device may comprise hearing device settings and/or fitting parameters.

In one or more exemplary methods, generating the configuration package comprises calculating a configuration data integrity indicator based on the configuration data. The configuration package data may be based on the configuration data integrity indicator. The configuration package data may comprise the configuration data integrity indicator. The configuration data integrity indicator, CDI, may refer to an indicator that enable a recipient to verify the integrity of the data to which the CDI is appended. The CDI may comprise for example a hashed checksum, such as checksum based on a hash function, such as SHA function, e.g. SHA1, SHA2. For example calculating a configuration data integrity indicator based on the configuration data may be performed using a hash function.

In one or more exemplary methods, generating the configuration package comprises encrypting the configuration data and/or the configuration data integrity indicator using the configuration keying material. The configuration package data may be based on the encrypted configuration data and/or the encrypted configuration data integrity indicator. For example, the configuration package data may comprise the encrypted configuration data and/or the encrypted configuration data integrity indicator.

In one or more exemplary methods, the configuration package data may comprise a configuration payload block and a control block, and the configuration payload block may comprise the encrypted configuration data and the encrypted configuration data integrity indicator. The control block is for example metadata such as header, CDI, a length of the configuration data.

In one or more exemplary methods, generating the configuration package comprises encrypting the configuration package data, e.g. using the session key. In other words, the configuration package data including the encrypted configuration data and/or the encrypted configuration data integrity indicator, and/or the control block using the session key.

One or more exemplary methods comprise transmitting the configuration package to the server device. One or more exemplary methods may comprise deleting the session key and the configuration keying material after transmitting the configuration package In one or more exemplary methods, the method may comprise sending an access request to the server device and receiving an access response from the server device. For example the fitting device may send an access request based on a login and password, and receive an access response based on verification of the login and password. Sending an access request to the server device and receiving an access response from the server device may be performed to gain access to the server device for communicating (e.g. configuration initiation request and configuration package).

This disclosure relates to a method, performed at a server device of a hearing system, for remote configuration of a hearing device in the hearing system. The hearing system comprises the hearing device, a user application installed on an accessory device, a fitting device and the server device. The service device may comprise a secure module wherein the secure module is configured to perform security operations such as deriving keys, encrypting certificates, digitally signing. The secure module may be implemented as hardware security module, collocated or remotely located with the server device. The accessory device has the user application installed thereon.

The accessory device comprises a memory unit and an interface respectively connected to a processing unit. The memory unit has a user application stored thereon. The user application may be a hearing device application, e.g. configured to wirelessly communicate with the hearing device, such as to control and/or configure the hearing device. The interface comprises an antenna and a wireless transceiver, e.g. configured for wireless communication at frequencies in the range from 2.4 to 2.5 GHz. The interface may be configured for communication, such as wireless communication, with the hearing device comprising an antenna and a wireless transceiver. The accessory device forms an accessory device to the hearing device. The accessory device is typically paired or otherwise wirelessly coupled to the hearing device. The hearing device may be a hearing aid, e.g. of the behind-the-ear (BTE) type, in-the-ear (ITE) type, in-the-canal (ITC) type, receiver-in-canal (RIC) type or receiver-in-the-ear (RITE) type. Typically, the accessory device is in possession of and controlled by the hearing device user. The accessory device may be a handheld device, such as smartphone or a tablet computer, or a wearable device such as a smartwatch.

One or more exemplary methods performed at the server device comprise receiving a configuration initiation request from the fitting device. The configuration initiation request comprises a hearing device identifier, a session key, and a shared index that supports in identifying a common secret shared with the hearing device. The session key
may be received at the server device in encrypted form using a configuration initiation public key. The method may then comprise decrypting the session key using a corresponding configuration initiation private key. The configuration initiation request may comprise a session counter.

The methods performed at the server device comprise generating configuration keying material based on the session key. The configuration keying material comprises a configuration key and optionally a configuration counter, both of which may be in plaintext or in encrypted form using the session key. The methods performed at the server device comprise transmitting a configuration initiation response to the fitting device. The configuration initiation response comprises the configuration keying material.

The methods performed at the server device comprise generating configuration authentication material. In one or more exemplary methods performed at the server device, the method may comprise receiving an access request at the server device, and sending an access response to the fitting device. The access request may comprise a dispenser identifier. The dispenser identifier may be a unique identifier assigned to a dispenser operating a fitting device or a group of dispensers. The dispenser identifier is configured to support the server device in finding a dispenser certificate in the memory module of the server device or a database.

The step of generating the configuration authentication material comprises obtaining a certificate key based on the hearing device identifier; obtaining a dispenser certificate using the dispenser identifier; encrypting the dispenser certificate using the certificate key; and including the encrypted dispenser certificate in the configuration authentication material. Obtaining a certificate key based on the hearing device identifier comprises retrieving a common secret from a memory module of the server device, or calculating the certificate key which is the output of a hash function that takes as input a string and the common secret. Obtaining a dispenser certificate using the dispenser identifier may comprise identifying or retrieving the dispenser certificate based on the dispenser identifier. The configuration authentication material may comprise type identifier that is used to identify the material as a configuration authentication material, a timestamp indicating when configuration authentication material is generated, a linking identifier configured to link the configuration authentication material to the configuration keying material, a hearing device identifier corresponding to the hearing device to which the configuration is addressed, an address identifier of the hearing device, a length of configuration authentication material, a challenge material, an index, a key identifier and/or the including the encrypted dispenser certificate.

The methods performed at the server device comprise transmitting a configuration initiation response to the fitting device, the configuration initiation response comprising the configuration keying material.

The methods performed at the server device comprise receiving a configuration package from the fitting device. The configuration package comprises a configuration payload block and a control block (such as metadata, e.g. header and one or more checksum). The configuration payload block may comprise configuration data, and a configuration data integrity indicator. In one or more exemplary methods, receiving the configuration package from the fitting device may comprise decrypting the configuration package data using the session key.

The methods performed at the server device comprise calculating an integrity indicator set based on the configuration payload block and the control block. The integrity indicator set may comprise one or more integrity indicators, such a first integrity indicator, a second integrity indicator. For example, the method may comprise computing a first integrity indicator based on the configuration payload block and a second integrity indicator based on the control block. The methods performed at the server device comprise generating a configuration block based on at least part of the integrity indicator set. The configuration block may comprise a block type identifier, a timestamp, a block identifier, a hearing device identifier of the hearing device, an address identifier, a first integrity indicator, and/or a second integrity indicator.

The methods performed at the server device comprise generating a configuration verification package based on the configuration block. In one or more exemplary methods, the method may comprise obtaining a first digital signature over the configuration block; and generating a configuration verification package is based on the first digital signature. For example, the server device may be configured to generate the first digital signature based on the configuration block and a configuration private key or to obtain the first digital signature from a secure module. Generating the configuration verification package based on the first digital signature may comprise including the first digital signature in the configuration verification package.

The methods performed at the server device comprise generating a configuration authentication package based on the configuration authentication material. In one or more exemplary methods, the method may comprise obtaining a second digital signature over the configuration authentication material; and generating a configuration authentication package is based on the second signature. For example, the server device may be configured to generate the second digital signature based on the configuration authentication material and a configuration private key or to obtain the second digital signature from a secure module. Generating the configuration authentication package based on the second digital signature may comprise including the second digital signature in the configuration authentication package. The configuration authentication package is generated so that the hearing device can verify the integrity of the configuration data.

The methods performed at the server device comprise transmitting the configuration package, the configuration verification package and the configuration authentication package, such as to the accessory device, to the application installed on the accessory device, or to the hearing device via the accessory device and possibly the application installed thereon.

The configuration verification package is used at the accessory device to verify the configuration package and/or the configuration authentication package. The configuration authentication package is used at the hearing device to authenticate the configuration package that actually comprises the fitting parameters or configuration data to be installed on the hearing device. In other words, the dispenser or the fitting device uses the server device to create a configuration authentication package for a specific hearing device. The configuration authentication package and the configuration package data in the configuration package are generated so that the hearing device is able to verify that the configuration package comes from a legitimate dispenser or legitimate fitting device and that the configuration data in the configuration package has not be tampered with nor disclosed by any other party because configuration data is private data that can be used to perform denial of service attack or battery exhaustion attacks on the hearing device.

This disclosure relates to a fitting device comprising a processing unit, a memory unit, and an interface. The fitting device is configured to perform any of the steps of the method according to this disclosure.

This disclosure relates to a server device comprising a processing unit, a memory unit, and an interface. The server device is configured to perform any of the steps of the method according to this disclosure.

The figures are schematic and simplified for clarity, and they merely show details which supports the present disclosure, while other details have been left out. Throughout, the same reference numerals are used for identical or corresponding parts.

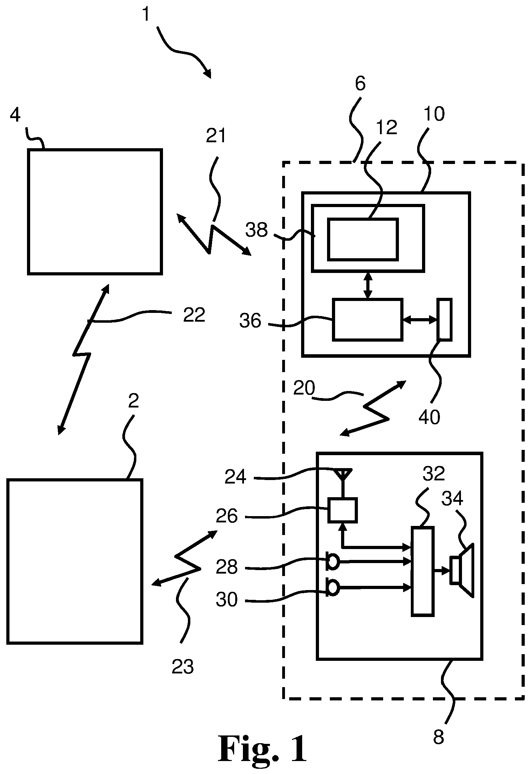

Fig. 1 shows an exemplary hearing system 1. The hearing system 1 comprises a server device 4, a fitting device 2 and a hearing device system 6 comprising a hearing device 8 and an accessory device 10. The accessory device 10 is a handheld device such as smartphone configured to wirelessly communicate with the hearing device 8. A user application 12 is installed on the accessory device 10. The user application may be for controlling the hearing device 8 and/or assisting a hearing device user wearing/using the hearing device 8. In one or more exemplary user applications, the user application 12 is configured to transfer configuration data (e.g. hearing device settings or fitting parameters), to the hearing device. The accessory device 10 comprises a processing unit 36, a memory unit 38, and an interface 40.

The hearing device 8 comprises an antenna 24 and a radio transceiver 26 coupled to the antenna 24 for receiving/transmitting wireless communication including first communication link 20. The hearing device 8 comprises a set of microphones comprising a first microphone 28 and optionally a second microphone 30 for provision of respective first and second microphone input signals. The hearing device 8 may be a single-microphone hearing device. The hearing device 8 comprises a memory unit (not shown) connected to the processor 32, wherein configuration data, e.g. fitting or hearing device settings are stored in the memory unit.

The hearing device 8 comprises a processor 32 connected to the transceiver 26 and microphones 28, 30 for receiving and processing input signals. The processor 32 is configured to compensate for a hearing loss of a user based on hearing device settings and to provide an electrical output signal based on the input signals. A receiver 34 converts the electrical output signal to an audio output signal to be directed towards an eardrum of the hearing device user.

The fitting device 2 is capable of communicating with the server device 4 through communication link 22, and with the hearing device system 6 through communication link 23. The hearing device 8 is capable of communicating with the accessory device 10 through communication link 20. In an embodiment, the fitting device 2 is configured for communicating with the accessory device 10 via communication link 23 and the hearing aid device is configured for communication with the accessory device 10 via communication link 20.

In an embodiment, the server device 4 is configured to communicate with the hearing device system 6, such as with the accessory device 10, and/or optionally the hearing device 8, via communication link 21.

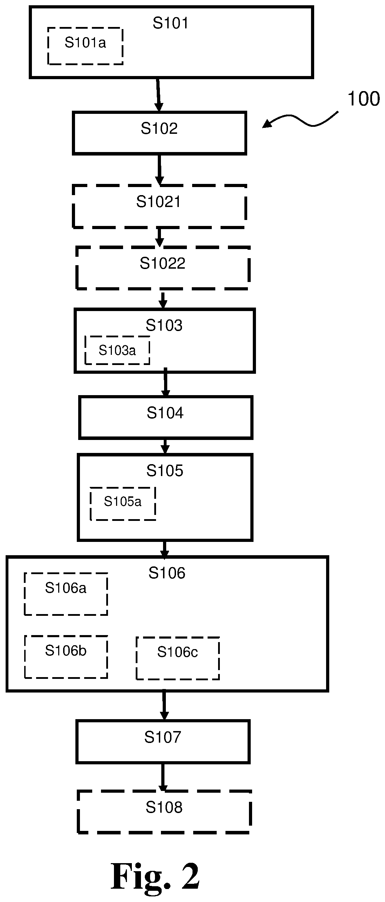

Fig. 2 shows a flow diagram of an exemplary non-claimed method 100 performed at a fitting device (such as fitting device 2 of Fig. 1) useful for the understanding of the invention according to this disclosure. Fig. 2 shows method 100 for remotely configuring a hearing device (such as hearing device 8 of Fig. 1) in the hearing system, the hearing system comprising the hearing device 8, the accessory device 10, the fitting device (such as fitting device 2 of Fig. 1) and a server device (such as server device 4 of Fig. 1). The method 100 comprises obtaining S101 hearing device data. The hearing device data comprises a hearing device identifier. In one or more exemplary methods, obtaining hearing device data comprises obtaining S101a or retrieving the hearing device data from a database remote from the fitting device such from the server device 4 via communication link 22. The method 100 comprises obtaining S102 a session key. Obtaining S102 a session key may comprise generating a session key e.g. as a random or pseudo-random number. The method 100 comprises generating S103 a configuration initiation request based on the session key and the hearing device identifier. For example, generating S103 the configuration initiation request may comprise encrypting S103a the session key using a configuration initiation public key, and including the encrypted session key in the configuration initiation request. The method 100 comprises transmitting S104 the configuration initiation request to the server device e.g. via communication link 22. The configuration initiation request comprise the session key, the hearing device identifier, optionally part of the hearing device data (e.g. the shared index), and optionally the session counter. The configuration initiation request is encrypted using the configuration initiation public key prior to transmission.

The method 100 comprises receiving S105 a configuration initiation response from the server device e.g. via communication link 22, the configuration initiation response comprising configuration keying material. Receiving S105 the configuration initiation response may comprise decrypting S105a the configuration keying material. For example, the configuration keying material is decrypted using the session key. The configuration keying material may comprise a configuration key (such as a symmetric key), and possibly a configuration keying counter.

The method 100 comprises generating S106 a configuration package based on configuration data for the hearing device and based on the configuration keying material. The configuration package comprises configuration package data. The configuration data may comprise data related to the hearing device. The data related to the hearing device may comprise hearing device settings and/or fitting parameters.

In one or more exemplary methods, generating S106 the configuration package comprises calculating S106a a configuration data integrity indicator based on the configuration data. The configuration package data may be based on the configuration data integrity indicator. In one or more exemplary methods, generating S106 the configuration package comprises encrypting S106b the configuration data and/or the configuration data integrity indicator using the configuration keying material. The configuration package data may be based on the encrypted configuration data and/or the encrypted configuration data integrity indicator. For example, the configuration package data may comprise the encrypted configuration data and/or the encrypted configuration data integrity indicator. In one or more exemplary methods, generating S106 the configuration package comprises encrypting S106c the configuration package data, e.g. using the session key.

The method 100 comprises transmitting S107 the configuration package to the server device e.g. via communication link 22. One or more exemplary methods 100 may comprise deleting S108 the session key and the configuration keying material after transmitting the configuration package.

In one or more exemplary methods, the method 100 may comprise sending S1021 an access request to the server device e.g. via communication link 22 and receiving S1022 an access response from the server device e.g. via communication link 22. For example the fitting device may send an access request based on a login and password, and receive an access response based on verification of the login and password. Sending an access request to the server device and receiving an access response from the server device may be performed to gain access to the server device for communicating (e.g. configuration initiation request and configuration package).

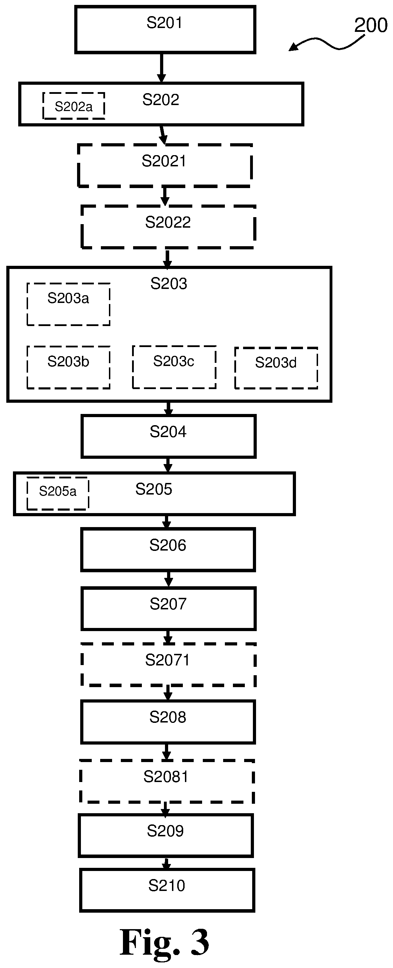

Fig. 3 shows a flow diagram of an exemplary method 200 performed at a server device (such as server device 4 of Fig. 1) according to this disclosure. Fig. 3 shows method 200 for remote configuration of a hearing device in the hearing system, such as for supporting the fitting device in performing a secure remote configuration of the hearing device. The hearing system comprises the hearing device, a user application installed on an accessory device, the fitting device and the server device.

Method 200 comprises receiving S201 a configuration initiation request from the fitting device e.g. via communication link 22. The configuration initiation request comprises a hearing device identifier, a session key, and a shared index that supports in identifying a common secret shared with the hearing device. The session key may be received at the server device in encrypted form using a configuration initiation public key. The method 200 may comprise decrypting the session key using a corresponding configuration initiation private key. The configuration initiation request may comprise a session counter.

Method 200 comprises generating S202 configuration keying material based on the session key. The configuration keying material comprises a configuration key and optionally a configuration counter, both of which may be in plaintext or in encrypted form using the session key. Method 200 comprises transmitting a configuration initiation response to the fitting device e.g. via communication link 22. The configuration initiation response comprises the configuration keying material.

Method 200 comprises generating S203 configuration authentication material. In one or more exemplary methods performed at the server device, method 200 may comprise receiving S2021 an access request at the server device, and sending S2022 an access response to the fitting device. The access request comprises a dispenser identifier.

The step of generating S203 the configuration authentication material comprises obtaining S203a a certificate key based on the hearing device identifier; obtaining S203b a dispenser certificate using the dispenser identifier; encrypting S203c the dispenser certificate using the certificate key; and including S203d the encrypted dispenser certificate in the configuration authentication material. The step of obtaining S203a a certificate key based on the hearing device identifier comprises retrieving a common secret from a memory module of the server device, or calculating the certificate key which is the output of a hash function that takes as input a string and the common secret. Obtaining S203b a dispenser certificate using the dispenser identifier may comprise identifying or retrieving the dispenser certificate based on the dispenser identifier.

Method 200 comprises transmitting S204 a configuration initiation response to the fitting device e.g. via communication link 22, the configuration initiation response comprising the configuration keying material. Method 200 comprises receiving S205 a configuration package from the fitting device e.g. via communication link 22. The configuration package comprises a configuration payload block and a control block (such as metadata, e.g. header and one or more checksum). The configuration payload block may comprise configuration data, and a configuration data integrity indicator. In one or more exemplary methods, receiving S205 the configuration package from the fitting device may comprise decrypting S205a the configuration package data using the session key.

Method 200 comprises calculating S206 an integrity indicator set based on the configuration payload block and the control block. The integrity indicator set comprises one or more integrity indicators, each integrity indicator computed based one or more parts of the configuration package. For example, method 200 may comprise computing a first integrity indicator based on the configuration payload block and a second integrity indicator based on the control block. Method 200 comprises generating S207 a configuration block based on at least part of the integrity indicator set. The configuration block may comprise the first integrity indicator, and/or the second integrity indicator, and optionally any of a block type identifier, a timestamp, a block identifier, a hearing device identifier of the hearing device, and an address identifier.

Method 200 comprises generating S208 a configuration verification package based on the configuration block. Method 200 may comprise obtaining S2071 a first digital signature over the configuration block and generating a configuration verification package is based on the first digital signature. For example, obtaining S2071 the first digital signature comprises generating the first digital signature based on the configuration block and a configuration private key or obtaining the first digital signature from a secure module. Generating S208 the configuration verification package may comprise including the first digital signature in the configuration verification package.

Method 200 comprises generating S209 a configuration authentication package based on the configuration authentication material. Method 200 may comprise obtaining S2081 a second digital signature over the configuration authentication material; and generating a configuration authentication package is based on the second signature. For example, obtaining S2081 the second digital signature comprises generating the second digital signature based on the configuration authentication material and a configuration private key or obtaining the second digital signature from a secure module. Generating the configuration authentication package based on the second digital signature may comprise including the second digital signature in the configuration authentication package.

Method 200 comprises transmitting S210 the configuration package, the configuration verification package and the configuration authentication package, such as to the accessory device, to the application installed on the accessory device, or to the hearing device via the accessory device and possibly the application installed thereon. For example, method 200 may comprise transmitting S210 the configuration package, the configuration verification package and the configuration authentication package to the accessory device 10, to the application installed 12 on the accessory device 10 via communication link 23. In one or more exemplary embodiments, method 200 may comprise transmitting S210 the configuration package, and the configuration authentication package through the accessory device 10 to the hearing device 8 via communication links 23 and 20.

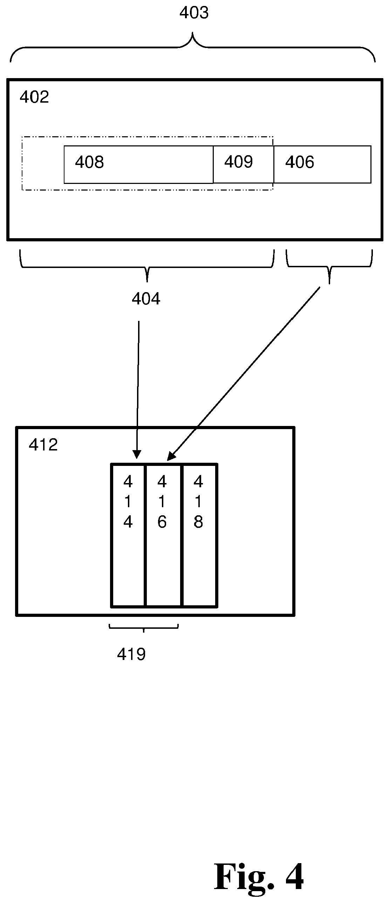

Fig. 4 schematically illustrates an exemplary configuration package 402, and an exemplary configuration verification package 412 according to this disclosure. The configuration package 402 comprising configuration package data 403. The configuration package data 403 comprises a configuration payload block 404 and a control block 406. The configuration package 402 is generated based on configuration data 408 for the hearing device. The configuration package data 403 comprises the configuration data 408, which is the actual fitting parameters or hearing device setting parameters, which are used to configure the hearing device. The configuration data 408 may be included in the configuration package data 403 in encrypted form using the configuration keying material comprising a configuration key. The configuration package data 403 comprises a configuration data integrity indicator 409 computed over the configuration data 408, and included in the configuration package data 403. The configuration payload block 404 comprises the configuration data 408 and the configuration data integrity indicator 409, which are optionally in encrypted form as indicated by the dashed box in Fig. 4. The control block 406 comprises headers, length of the configuration data and metadata. The fitting device may be configured to generate the configuration package by encrypting, e.g. using the session key, the configuration package data 403, i.e. the configuration payload block 404 and the control block 406. The configuration package is generated at the fitting device.

The configuration verification package 412 is generated at the server device. The configuration verification package 412 comprises a set of integrity indicators, such as a first integrity indicator 414, a second integrity indicator 416. The server receives a configuration package 402 from the fitting device. The configuration package 402 comprises a configuration payload block 404 and a control block 406. The server generates a configuration block 419 by computing a first integrity indicator 414 based on the configuration payload block 404 and a second integrity indicator 416 based on the control block 406, and including the first integrity indicator 414 and the second integrity indicator 416 into the configuration block 419. The server devices signs the configuration verification package 412 using a configuration private key. The configuration verification package 412 comprises a first digital signature 418.

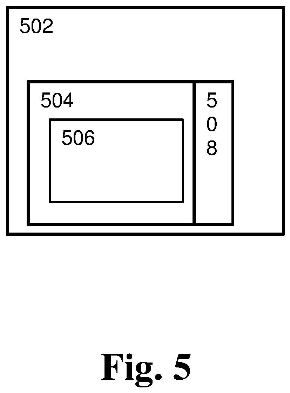

Fig. 5 schematically illustrates an exemplary configuration authentication package 502 according to this disclosure. The configuration authentication package 502 is generated by the server device. The configuration authentication package 502 comprises a configuration authentication material 504. The configuration authentication material 504 comprises a dispenser certificate 506, which may be encrypted using a certificate key, which comprised in the dispenser certificate retrieved by the server device using the dispenser identifier comprised in the access request received from the fitting device. The server obtains a second digital signature 508 over the configuration authentication material 504 using a configuration private key that is stored in the server device and used for configuration purposes. The configuration authentication package 502 comprises the second digital signature 508.

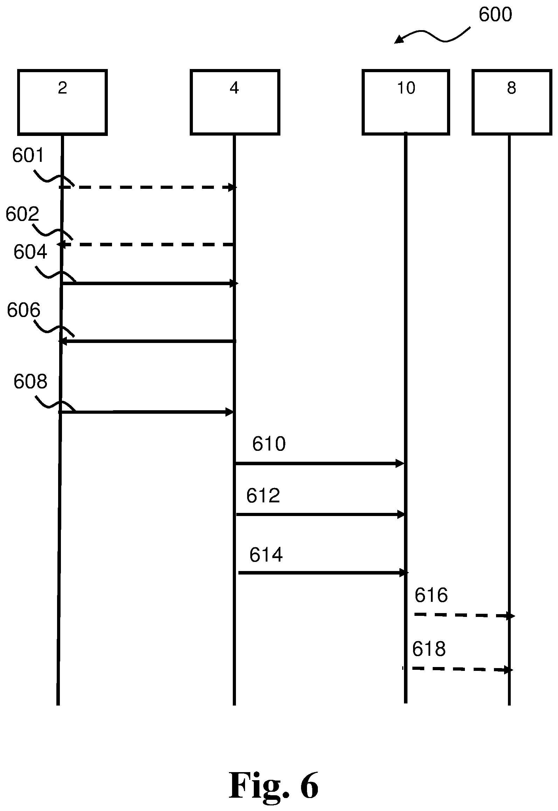

Fig. 6 schematically illustrates an exemplary signaling diagram 600 between a fitting device 2, a server device 4, an accessory device 10 and a hearing device 8 according to this disclosure. The fitting device 2 may be configured to send an access request 601 to the server device 4 and to receive an access response 602 from the server device. The access request may comprise a dispenser identifier that identifies the user of the fitting device 2. The fitting device 2 sends a configuration initiation request 604 to the server device 4. The configuration initiation request 604 comprises the session key, the hearing device identifier, optionally part of the hearing device data (e.g. the shared index), and optionally the session counter. The server device 4 responds with a configuration initiation response 606, the configuration initiation response 606 comprising configuration keying material. The fitting device 2 generates a configuration package based the configuration keying material received and configuration data that the dispenser has devised on the fitting device 2. The fitting device 2 transmits the configuration package 608 to the server device 4.

The server device 4 generates a configuration verification package 610 as disclosed in steps SS206, S207, S2071, and S208. The server device 4 sends the configuration verification package 610 to the accessory device 10 or the user application installed thereon via communication link 21, or optionally via the fitting device 2 and communication links 22 and 23. The server device 4 generates a configuration authentication package 612 as disclosed in steps S203, S203a-c, S2081, and S209. The server device 4 sends a configuration authentication package 612 to the accessory device 10 or the user application installed thereon. The server device 4 decrypts the configuration package 608 received from the fitting device 2 using the session key shared between the server device 4 and the fitting device 2. The server device sends the resulting configuration package in message 614 to the accessory device 10 or the user application installed thereon. The accessory device 10 may then pass on to the hearing device the configuration authentication package in a message 616 and the configuration package in a message 618 so that the secure remote configuration can take place.

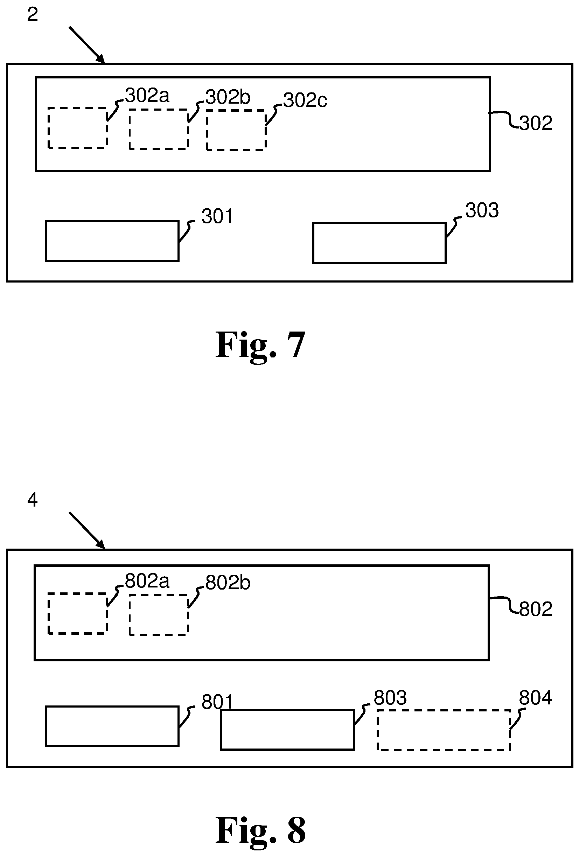

Fig. 7 schematically illustrates an exemplary non-claimed fitting device 2 useful for the understanding of the invention according to this disclosure. The fitting device 2 comprising a processing unit 302, a memory unit 301, and an interface 303. The fitting device 2 or the processing unit 302 is configured to perform any of the steps of the method according to this disclosure (such as method 100 of Fig. 2). The processing unit 302 is configured to obtain hearing device data. The processing unit 302 is configured to generate a session key e.g. as a random or pseudo-random number. The processing unit 302 is configured to generate a configuration initiation request based on the session key and the hearing device identifier. The interface 303 is configured to transmit the configuration initiation request to the server device. The configuration initiation request comprise the session key, the hearing device identifier, optionally part of the hearing device data (e.g. the shared index), and optionally the session counter. The configuration initiation request is encrypted by the processing unit 302 using the configuration initiation public key prior to transmission.

The interface 303 is configured to receive a configuration initiation response from the server device, the configuration initiation response comprising configuration keying material. The processing unit 302 is configured to decrypt the configuration keying material, e.g. using the session key. The configuration keying material may comprise a configuration key (such as a symmetric), and possibly a configuration keying counter.

The processing unit 302 is configured to generate a configuration package based on configuration data for the hearing device and based on the configuration keying material. The configuration package comprises configuration package data. The configuration data may comprise data related to the hearing device. The data related to the hearing device may comprise hearing device settings and/or fitting parameters.

The processing unit 302 may be configured to generate the configuration package by calculating a configuration data integrity indicator based on the configuration data. The processing unit 302 is configured to generate the configuration package by encrypting the configuration data and/or the configuration data integrity indicator using the configuration keying material. The configuration package data may be based on the encrypted configuration data and/or the encrypted configuration data integrity indicator. For example, the configuration package data may comprise the encrypted configuration data and/or the encrypted configuration data integrity indicator. The processing unit 302 may be configured to generate the configuration package by encrypting the configuration package data, e.g. using the session key.

The interface 303 is configured to transmit the configuration package to the server device. The processing unit 302 may be configured to delete the session key and the configuration keying material after transmitting the configuration package The interface 303 is configured to send an access request to the server device and receive an access response from the server device.

The interface 303 may be configured to communicate with a user of the fitting device (e.g. a dispenser) using e.g. a keyboard and/or a display.

The fitting device 2 or the processing unit 302 is arranged to execute methods for remote configuration of a hearing device as disclosed herein. The fitting device 2 or the processing unit 302 may further comprise a number of optional functional modules, such as any of an obtain module 302a configured to perform steps S101 and S102, and a generate module 302b configured to perform step S103 and S106. The obtain module 302a is optionally configured to perform step S101a. The generate module 302b is optionally configured to perform step S103a. The generate module 302b is optionally configured to perform steps S106a, S106b, S106c. The processing unit 302 may further comprise a delete module 302c configured to perform step S108. The functionality of each functional module 302a-c is disclosed in the context of which the functional modules 302a-c may be used in Fig. 2 and accompanying text. In general terms, each functional module 302a-c may be implemented in hardware or in software. Preferably, one or more or all functional modules 302a-c may be implemented by the processing module 302, possibly in cooperation with functional units 301 and 303. The processing module 302 may thus be arranged to fetch instructions from the memory module 301 as provided by a functional module 302a-c and to execute these instructions, thereby performing any steps of method 100 as disclosed herein in Fig. 2.

Fig. 8 schematically illustrates an exemplary server device 4 according to this disclosure. The server device 4 comprises a processing unit 802, a memory unit 801, and an interface 803. The memory unit 801 may include removable and non-removable data storage units including, but not limited to, Read Only Memory (ROM), Random Access Memory (RAM), etc. The server device 4 is configured to perform any of the steps of the method according to this disclosure (such as method 200 of Fig. 3).

The server device 4 or the interface 803 is configured to receive a configuration initiation request from the fitting device, the configuration initiation request comprising a hearing device identifier, and a session key.

The server device 4 or the processing unit 802 is configured to generate configuration keying material based on the session key. The server device 4 or the processing unit 802 is configured to generate configuration authentication material. The server device 4 or the interface 803 is configured to transmit a configuration initiation response to the fitting device, the configuration initiation response comprising the configuration keying material. The server device 4 or the interface 803 is configured to receive a configuration package from the fitting device, the configuration package comprising a configuration payload block and a control block. The server device 4 or the processing unit 802 is configured to calculate an integrity indicator set based on the configuration payload block and the control block. The server device 4 or the processing unit 802 is configured to generate a configuration block based on at least part of the integrity indicator set. The server device 4 or the processing unit 802 may be configured to obtain a first digital signature over the configuration block. The server device 4 or the processing unit 802 is configured to generate a configuration verification package based on the configuration block and optionally the first digital signature. The server device 4 or the processing unit 802 may be configured to obtain a second digital signature over the configuration authentication material. The server device 4 or the processing unit 802 is configured to generate a configuration authentication package based on the configuration authentication material, and optionally on the second signature. The server device 4 or the interface 803 is configured to transmit the configuration package, the configuration verification package and the configuration authentication package, to e.g. the hearing device and/or the accessory device.

The server device 4 may comprise a secure module 804 to perform cryptographic functions, such as encrypting, decrypting and digitally signing. The secure module 804 may be implemented as hardware security module, collocated or remotely located with the server device 4.

The server device 4 or the processing unit 802 is arranged to execute methods for supporting the remote configuration of the hearing device as disclosed herein. The server device 4 or the processing unit 802 may further comprise a number of optional functional modules, such as any of a generate module 802a configured to perform step S202, S203, S207, S208, and S209. The generate module 802a is optionally configured to perform step S203a-d. The generate module 802a is optionally configured to perform step S202a. The processing unit 802 may further comprise an obtain module 802b configured to perform step S2071 and optionally S2081. The functionality of each functional module 802a-b is disclosed in the context of which the functional modules 802a-b may be used in Fig. 3 and accompanying text. In general terms, each functional module 802a-b may be implemented in hardware or in software. Preferably, one or more or all functional modules 802a-b may be implemented by the processing module 802, possibly in cooperation with functional units 801 and 803, and optionally 804. The processing module 802 may thus be arranged to fetch instructions from the memory module 801 as provided by a functional module 802a-b and to execute these instructions, thereby performing any steps of method 200 as disclosed herein in Fig. 3.

The interface 803 may be configured to communicate with a user of the server device using e.g. a keyboard and/or a display.

The use of the terms "first", "second", "third" and "fourth", etc. does not imply any particular order, but are included to identify individual elements. Moreover, the use of the terms first, second, etc. does not denote any order or importance, but rather the terms first, second, etc. are used to distinguish one element from another. Note that the words first and second are used here and elsewhere for labelling purposes only and are not intended to denote any specific spatial or temporal ordering. Furthermore, the labelling of a first element does not imply the presence of a second element and vice versa.

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense.

### LIST OF REFERENCES

- 1: hearing system
- 2: fitting device
- 4: server device
- 6: hearing device system
- 8: hearing device
- 10: accessory device
- 12: user application
- 20: communication link between user accessory device and hearing device
- 21: communication link between server device and user accessory device
- 22: communication link between fitting device and server device
- 23: communication link between fitting device and hearing device system
- 24: antenna
- 26: radio transceiver
- 28: first microphone
- 30: second microphone
- 32: processor
- 32a: determine module
- 32b: update module
- 33: interface
- 34: receiver
- 35: memory unit
- 36: processing unit
- 36a: determine module
- 38: memory unit
- 40: interface
- 100: method performed at the fitting device
- 200: method performed at the server device
- 301: memory unit
- 302: processing unit
- 302a: obtain module
- 302b: generate module
- 302c: delete module
- 303: interface
- 402: configuration package
- 403: configuration package data
- 404: configuration payload block
- 406: configuration control block
- 408: configuration data
- 409: configuration data integrity indicator
- 412: configuration verification package
- 414: first integrity indicator
- 416: second integrity indicator
- 418: first digital signature
- 419: configuration block
- 502: configuration authentication package
- 504: configuration authentication material
- 506: dispenser certificate
- 508: second digital signature
- 600: signaling diagram
- 601: access request
- 602: access response
- 604: configuration initiation request
- 606: configuration initiation response
- 608: configuration package
- 610: configuration verification package
- 612: configuration authentication package
- 614: message
- 616: message
- 618: message
- 801: memory unit
- 802: processing unit
- 802a: generate module
- 802b: obtain module
- 803: interface
- 804: secure module

## Claims

1. A method, performed at a server device (4) of a hearing system (1), for remote configuration of a hearing device (8) in the hearing system (1), the hearing system (1) comprising the hearing device (8), a user application (12) installed on an accessory device (10), a fitting device (2) and the server device (4), the method comprising:
- receiving (S201) a configuration initiation request from the fitting device (2), the configuration initiation request comprising a session key;
wherein the configuration initiation request comprises a hearing device identifier and a shared index that supports in identifying a common secret shared with the hearing device and that the method comprises:
- generating (S202) configuration keying material based on the session key;
- generating (S203) configuration authentication material, wherein generating (S203) the configuration authentication material comprises:
- obtaining (S203a) a certificate key based on the hearing device identifier; wherein obtaining a certificate key based on the hearing device identifier comprises retrieving the common secret from a memory module of the server device, or calculating the certificate key which is the output of a hash function that takes as input a string and the common secret;
- obtaining (S203b) a dispenser certificate using a dispenser identifier;
- encrypting (S203c) the dispenser certificate using the certificate key; and
- including (S203d) the encrypted dispenser certificate in the configuration authentication material;
- transmitting (S204) a configuration initiation response to the fitting device (2), the configuration initiation response comprising the configuration keying material;
- receiving (S205) a configuration package from the fitting device (2), the configuration package comprising a configuration payload block and a control block;
- calculating (S206) an integrity indicator set based on the configuration payload block and the control block;
- generating (S207) a configuration block based on at least part of the integrity indicator set;
- generating (S208) a configuration verification package based on the configuration block;
- generating (S209) a configuration authentication package based on the configuration authentication material; and
- transmitting (S210) the configuration package, the configuration verification package and the configuration authentication package.

2. Method according to claim 1, wherein generating (S202) the configuration keying material based on the session key comprises encrypting (S202a) a configuration session key using the session key, and including the encrypted configuration session key into the configuration keying material.

3. Method according to any of claims 1-2, the method comprising receiving (S2021) an access request at the server device (4), the access request comprising the dispenser identifier and sending (S2022) an access response to the fitting device (2).

4. Method according to any of claims 1-3, the method comprising obtaining (S2071) a first digital signature over the configuration block; and generating a configuration verification package is based on the first digital signature.

5. Method according to any of claims 1-4, the method comprising obtaining (S2081) a second digital signature over the configuration authentication material; and wherein generating a configuration authentication package is based on the second signature.

6. Method according to any of claims 1-5, wherein receiving (S205) the configuration package from the fitting device (2) comprises decrypting (S205a) the configuration package data using the session key.

7. A method, performed by a hearing system (1), for remotely configuring a hearing device (8) in the hearing system (1), the hearing system (1) comprising the hearing device (8), a fitting device (2), an accessory device (10), and a server device (4), the method comprising the steps of the method of any of claims 1-6 performed by the server device (4) of the hearing system, so that the method performed by the hearing system comprises:
- obtaining (S101), at the fitting device (2), hearing device data comprising a hearing device identifier of the hearing device;
- obtaining (S102), at the fitting device (2), a session key;
- generating (S103), at the fitting device (2), a configuration initiation request based on the session key and the hearing device identifier;
- transmitting (S104) the configuration initiation request from the fitting device (2) to the server device, the configuration initiation request comprising the hearing device identifier, the session key, and a shared index that supports in identifying a common secret shared with the hearing device;
- generating (S202), at the server device (4), configuration keying material based on the session key;
- generating (S203), at the server device (4), configuration authentication material, wherein generating (S203) the configuration authentication material comprises:
- obtaining (S203a) a certificate key based on the hearing device identifier; wherein obtaining a certificate key based on the hearing device identifier comprises retrieving the common secret from a memory module of the server device, or calculating the certificate key which is the output of a hash function that takes as input a string and the common secret;
- obtaining (S203b) a dispenser certificate using a dispenser identifier;
- encrypting (S203c) the dispenser certificate using the certificate key; and
- including (S203d) the encrypted dispenser certificate in the configuration authentication material;
- receiving (S105), at the fitting device (2), a configuration initiation response from the server device (4), the configuration initiation response comprising configuration keying material;
- generating (S106), at the fitting device (2), a configuration package based on configuration data for the hearing device and based on the configuration keying material, the configuration package comprising configuration package data, wherein generating (S106) the configuration package comprises encrypting (S106b) the configuration data using the configuration keying material, and wherein the configuration package data includes the encrypted configuration data;
- receiving (S205), at the server device (4), the configuration package from the fitting device (2), the configuration package comprising a configuration payload block and a control block; wherein receiving (S205), at the server device (4), the configuration package from the fitting device (2) comprises decrypting (S205a), at the server device (4), the configuration package data using the session key;
- calculating (S206), at the server device (4), an integrity indicator set based on the configuration payload block and the control block;
- generating (S207), at the server device (4), a configuration block based on at least part of the integrity indicator set;
- generating (S208), at the server device (4), a configuration verification package based on the configuration block;
- generating (S209), at the server device (4), a configuration authentication package based on the configuration authentication material;
- transmitting (S210), to the accessory device (10), the configuration package, the configuration verification package and the configuration authentication package (612) from the server device (4);
- verifying, at the accessory device (10), the configuration package and the configuration authentication package using the configuration verification package; and
- transmitting, from the accessory device (10) to the hearing device (8), the configuration package and the configuration authentication package.

8. Method according to claim 7, wherein generating (S103) , at the fitting device (2), the configuration initiation request comprises encrypting (S103a), at the fitting device (2), the session key using a configuration initiation public key, and including the encrypted session key in the configuration initiation request.

9. Method according to any of claims 7-8, wherein the hearing device data comprises a shared index, a fitting device key identifier, an address identifier, and/or fitting information.

10. Method according to any of claims 7-9, wherein receiving (S105) the configuration initiation response comprises decrypting (S105a), at the fitting device (2), the configuration keying material.

11. Method according to any of claims 7-10, wherein generating (S106), at the fitting device (2), the configuration package comprises calculating (S106a) a configuration data integrity indicator based on the configuration data, and wherein the configuration package data is based on the configuration data integrity indicator.

12. Method according to according to claim 11, wherein generating (S106), at the fitting device (2), the configuration package comprises encrypting (S106b) the configuration data integrity indicator using the configuration keying material, and wherein the configuration package data is based on the encrypted configuration data integrity indicator.

13. Method according to claim 12, wherein the configuration package data comprises a configuration payload block and a control block, and wherein the configuration payload block comprises the encrypted configuration data and the encrypted configuration data integrity indicator.

14. Method according to any of claims 7-13, wherein generating (S106), at the fitting device (2), the configuration package comprises encrypting (S106c) the configuration package data.

15. Method according to any of claims 7-14, the method comprising sending (S1021) an access request from the fitting device (2) to the server device (4) and receiving (1022), at the fitting device (2), an access response from the server device (4).

16. Method according to any of claims 7-15, the method comprising deleting (S108), at the fitting device (2), the session key and the configuration keying material after transmitting the configuration package.

17. A hearing system comprising
a fitting device (2);
a server device (4);
wherein the hearing system is configured to perform any of claims 7-16.

18. A server device (4) comprising:
- a processing unit (802);
- a memory unit (801); and
- an interface (803);
wherein the server device (4) is configured to perform any of claims 1-6.

## Patentansprüche

1. Ein Verfahren, das an einer Servervorrichtung (4) eines Hörgeräte-Systems (1) zur Fernkonfiguration einer Hörvorrichtung (8) im Hörgeräte-System (1) durchgeführt wird, wobei das Hörgeräte-System (1) die Hörvorrichtung (8), eine Benutzeranwendung (12), die auf einer Zubehörvorrichtung (10) installiert ist, eine Anpassvorrichtung (2) und die Servervorrichtung (4) umfasst, wobei das Verfahren umfasst:
- Empfangen (S201) einer Konfigurationsinitiierungsanforderung von der Anpassvorrichtung (2), wobei die Konfigurationsinitiierungsanforderung einen Sitzungsschlüssel umfasst;
wobei die Konfigurationsinitiierungsanforderung eine Hörvorrichtungskennung und einen gemeinsamen Index umfasst, der dabei unterstützt, ein gemeinsames Geheimnis zu identifizieren, das mit der Hörvorrichtung geteilt wird, und wobei das Verfahren umfasst:
- Erzeugen (S202) von Konfigurationsschlüsselmaterial basierend auf dem Sitzungsschlüssel;
- Erzeugen (S203) von Konfigurationsauthentifizierungsmaterial, wobei das Erzeugen (S203) des Konfigurationsauthentifizierungsmaterials umfasst:
- Erhalten (S203a) eines Zertifikatsschlüssels basierend auf der Hörvorrichtungskennung; wobei das Erhalten eines Zertifikatsschlüssels basierend auf der Hörvorrichtungskennung das Abrufen des gemeinsamen Geheimnisses aus einem Speichermodul der Servervorrichtung oder das Berechnen des Zertifikatsschlüssels umfasst, der die Ausgabe einer Hash-Funktion ist, die als Eingabe eine Zeichenkette und das gemeinsame Geheimnis nimmt;
- Erhalten (S203b) eines Abgeberzertifikats unter Verwendung einer Abgeberkennung;
- Verschlüsseln (S203c) des Abgeberzertifikats unter Verwendung des Zertifikatsschlüssels; und
- Einbeziehen (S203d) des verschlüsselten Abgeberzertifikats in das Konfigurationsauthentifizierungsmaterial;
- Übertragen (S204) einer Konfigurationsinitiierungsantwort an die Anpassvorrichtung (2), wobei die Konfigurationsinitiierungsantwort das Konfigurationsschlüsselmaterial umfasst;
- Empfangen (S205) eines Konfigurationspakets von der Anpassvorrichtung (2), wobei das Konfigurationspaket einen Konfigurationsnutzlastblock und einen Steuerblock umfasst;
- Berechnen (S206) eines Integritätsanzeigesatzes basierend auf dem Konfigurationsnutzlastblock und dem Steuerblock;
- Erzeugen (S207) eines Konfigurationsblocks basierend auf mindestens einem Teil des Integritätsanzeigesatzes;
- Erzeugen (S208) eines Konfigurationsverifizierungspakets basierend auf dem Konfigurationsblock;
- Erzeugen (S209) eines Konfigurationsauthentifizierungspakets basierend auf dem Konfigurationsauthentifizierungsmaterial; und
- Übertragen (S210) des Konfigurationspakets, des Konfigurationsverifizierungspakets und des Konfigurationsauthentifizierungspakets.

2. Verfahren nach Anspruch 1, wobei das Erzeugen (S202) des Konfigurationsschlüsselmaterials basierend auf dem Sitzungsschlüssel das Verschlüsseln (S202a) eines Konfigurationssitzungsschlüssels unter Verwendung des Sitzungsschlüssels und das Einbeziehen des verschlüsselten Konfigurationssitzungsschlüssels in das Konfigurationsschlüsselmaterial umfasst.

3. Verfahren nach einem der Ansprüche 1-2, wobei das Verfahren das Empfangen (S2021) einer Zugriffsanforderung an der Servervorrichtung (4) umfasst, wobei die Zugriffsanforderung die Abgeberkennung umfasst, und das Senden (S2022) einer Zugriffsantwort an die Anpassvorrichtung (2).

4. Verfahren nach einem der Ansprüche 1-3, wobei das Verfahren das Erhalten (S2071) einer ersten digitalen Signatur über den Konfigurationsblock umfasst; und wobei das Erzeugen eines Konfigurationsverifizierungspakets auf der ersten digitalen Signatur basiert.

5. Verfahren nach einem der Ansprüche 1-4, wobei das Verfahren das Erhalten (S2081) einer zweiten digitalen Signatur über das Konfigurationsauthentifizierungsmaterial umfasst; und wobei das Erzeugen eines Konfigurationsauthentifizierungspakets auf der zweiten Signatur basiert.

6. Verfahren nach einem der Ansprüche 1-5, wobei das Empfangen (S205) des Konfigurationspakets von der Anpassvorrichtung (2) das Entschlüsseln (S205a) der Konfigurationspaketdaten unter Verwendung des Sitzungsschlüssels umfasst.

7. Ein Verfahren, das von einem Hörgeräte-System (1) zur Fernkonfiguration einer Hörvorrichtung (8) im Hörgeräte-System (1) durchgeführt wird, wobei das Hörgeräte-System (1) die Hörvorrichtung (8), eine Anpassvorrichtung (2), eine Zubehörvorrichtung (10) und eine Servervorrichtung (4) umfasst, wobei das Verfahren die Schritte des Verfahrens nach einem der Ansprüche 1-6 umfasst, die von der Servervorrichtung (4) des Hörgeräte-Systems durchgeführt werden, sodass das von dem Hörgeräte-System durchgeführte Verfahren umfasst:
- Erhalten (S101), an der Anpassvorrichtung (2), von Hörvorrichtungsdaten, die eine Hörvorrichtungskennung der Hörvorrichtung umfassen;
- Erhalten (S102), an der Anpassvorrichtung (2), eines Sitzungsschlüssels;
- Erzeugen (S103), an der Anpassvorrichtung (2), einer Konfigurationsinitiierungsanforderung basierend auf dem Sitzungsschlüssel und der Hörvorrichtungskennung;
- Übertragen (S104) der Konfigurationsinitiierungsanforderung von der Anpassvorrichtung (2) zur Servervorrichtung, wobei die Konfigurationsinitiierungsanforderung die Hörvorrichtungskennung, den Sitzungsschlüssel und einen gemeinsamen Index umfasst, der dabei unterstützt, ein gemeinsames Geheimnis zu identifizieren, das mit der Hörvorrichtung geteilt wird;
- Erzeugen (S202), an der Servervorrichtung (4), von Konfigurationsschlüsselmaterial basierend auf dem Sitzungsschlüssel;
- Erzeugen (S203), an der Servervorrichtung (4), von Konfigurationsauthentifizierungsmaterial, wobei das Erzeugen (S203) des Konfigurationsauthentifizierungsmaterials umfasst:
- Erhalten (S203a) eines Zertifikatsschlüssels basierend auf der Hörvorrichtungskennung; wobei das Erhalten eines Zertifikatsschlüssels basierend auf der Hörvorrichtungskennung das Abrufen des gemeinsamen Geheimnisses aus einem Speichermodul der Servervorrichtung oder das Berechnen des Zertifikatsschlüssels umfasst, der die Ausgabe einer Hash-Funktion ist, die als Eingabe eine Zeichenkette und das gemeinsame Geheimnis nimmt;
- Erhalten (S203b) eines Abgeberzertifikats unter Verwendung einer Abgeberkennung;
- Verschlüsseln (S203c) des Abgeberzertifikats unter Verwendung des Zertifikatsschlüssels; und
- Einbeziehen (S203d) des verschlüsselten Abgeberzertifikats in das Konfigurationsauthentifizierungsmaterial;
- Empfangen (S105), an der Anpassvorrichtung (2), einer Konfigurationsinitiierungsantwort von der Servervorrichtung (4), wobei die Konfigurationsinitiierungsantwort Konfigurationsschlüsselmaterial umfasst;
- Erzeugen (S106), an der Anpassvorrichtung (2), eines Konfigurationspakets basierend auf Konfigurationsdaten für die Hörvorrichtung und basierend auf dem Konfigurationsschlüsselmaterial, wobei das Konfigurationspaket Konfigurationspaketdaten umfasst, wobei das Erzeugen (S106) des Konfigurationspakets das Verschlüsseln (S106b) der Konfigurationsdaten unter Verwendung des Konfigurationsschlüsselmaterials umfasst und wobei die Konfigurationspaketdaten die verschlüsselten Konfigurationsdaten enthalten;
- Empfangen (S205), an der Servervorrichtung (4), des Konfigurationspakets von der Anpassvorrichtung (2), wobei das Konfigurationspaket einen Konfigurationsnutzlastblock und einen Steuerblock umfasst; wobei das Empfangen (S205), an der Servervorrichtung (4), des Konfigurationspakets von der Anpassvorrichtung (2) das Entschlüsseln (S205a), an der Servervorrichtung (4), der Konfigurationspaketdaten unter Verwendung des Sitzungsschlüssels umfasst;
- Berechnen (S206), an der Servervorrichtung (4), eines Integritätsanzeigesatzes basierend auf dem Konfigurationsnutzlastblock und dem Steuerblock;
- Erzeugen (S207), an der Servervorrichtung (4), eines Konfigurationsblocks basierend auf mindestens einem Teil des Integritätsanzeigesatzes;
- Erzeugen (S208), an der Servervorrichtung (4), eines Konfigurationsverifizierungspakets basierend auf dem Konfigurationsblock;
- Erzeugen (S209), an der Servervorrichtung (4), eines Konfigurationsauthentifizierungspakets basierend auf dem Konfigurationsauthentifizierungsmaterial;
- Übertragen (S210), an die Zubehörvorrichtung (10), des Konfigurationspakets, des Konfigurationsverifizierungspakets und des Konfigurationsauthentifizierungspakets (612) von der Servervorrichtung (4);
- Verifizieren, an der Zubehörvorrichtung (10), des Konfigurationspakets und des Konfigurationsauthentifizierungspakets unter Verwendung des Konfigurationsverifizierungspakets; und
- Übertragen, von der Zubehörvorrichtung (10) zur Hörvorrichtung (8), des Konfigurationspakets und des Konfigurationsauthentifizierungspakets.

8. Verfahren nach Anspruch 7, wobei das Erzeugen (S103), an der Anpassvorrichtung (2), der Konfigurationsinitiierungsanforderung das Verschlüsseln (S103a), an der Anpassvorrichtung (2), des Sitzungsschlüssels unter Verwendung eines öffentlichen Konfigurationsinitiierungsschlüssels und das Einbeziehen des verschlüsselten Sitzungsschlüssels in die Konfigurationsinitiierungsanforderung umfasst.

9. Verfahren nach einem der Ansprüche 7-8, wobei die Hörvorrichtungsdaten einen gemeinsamen Index, eine Anpassvorrichtungsschlüsselkennung, eine Adresskennung und/oder Anpassinformationen umfassen.

10. Verfahren nach einem der Ansprüche 7-9, wobei das Empfangen (S105) der Konfigurationsinitiierungsantwort das Entschlüsseln (S105a), an der Anpassvorrichtung (2), des Konfigurationsschlüsselmaterials umfasst.

11. Verfahren nach einem der Ansprüche 7-10, wobei das Erzeugen (S106), an der Anpassvorrichtung (2), des Konfigurationspakets das Berechnen (S106a) eines Konfigurationsdaten-Integritätsindikators basierend auf den Konfigurationsdaten umfasst und wobei die Konfigurationspaketdaten auf dem Konfigurationsdaten-Integritätsindikator basieren.

12. Verfahren nach Anspruch 11, wobei das Erzeugen (S106), an der Anpassvorrichtung (2), des Konfigurationspakets das Verschlüsseln (S106b) des Konfigurationsdaten-Integritätsindikators unter Verwendung des Konfigurationsschlüsselmaterials umfasst und wobei die Konfigurationspaketdaten auf dem verschlüsselten Konfigurationsdaten-Integritätsindikator basieren.

13. Verfahren nach Anspruch 12, wobei die Konfigurationspaketdaten einen Konfigurationsnutzlastblock und einen Steuerblock umfassen und wobei der Konfigurationsnutzlastblock die verschlüsselten Konfigurationsdaten und den verschlüsselten Konfigurationsdaten-Integritätsindikator umfasst.

14. Verfahren nach einem der Ansprüche 7-13, wobei das Erzeugen (S106), an der Anpassvorrichtung (2), des Konfigurationspakets das Verschlüsseln (S106c) der Konfigurationspaketdaten umfasst.

15. Verfahren nach einem der Ansprüche 7-14, wobei das Verfahren das Senden (S1021) einer Zugriffsanforderung von der Anpassvorrichtung (2) an die Servervorrichtung (4) und das Empfangen (1022), an der Anpassvorrichtung (2), einer Zugriffsantwort von der Servervorrichtung (4) umfasst.

16. Verfahren nach einem der Ansprüche 7-15, wobei das Verfahren das Löschen (S108), an der Anpassvorrichtung (2), des Sitzungsschlüssels und des Konfigurationsschlüsselmaterials nach der Übertragung des Konfigurationspakets umfasst.

17. Ein Hörgeräte-System, umfassend:
- eine Anpassvorrichtung (2);
- eine Servervorrichtung (4);
wobei das Hörgeräte-System dazu konfiguriert ist, eines der Ansprüche 7-16 durchzuführen.

18. Eine Servervorrichtung (4), umfassend:
- eine Verarbeitungseinheit (802);
- eine Speichereinheit (801); und
- eine Schnittstelle (803);
wobei die Servervorrichtung (4) dazu konfiguriert ist, eines der Ansprüche 1-6 durchzuführen.

## Revendications

1. Procédé, exécuté au niveau d'un dispositif serveur (4) d'un système audiologique (1), pour la configuration à distance d'un dispositif auditif (8) dans le système audiologique (1), le système audiologique (1) comprenant le dispositif auditif (8), une application utilisateur (12) installée sur un dispositif accessoire (10), un dispositif d'adaptation (2) et le dispositif serveur (4), le procédé comprenant :
- la réception (S201) d'une demande d'initiation de configuration en provenance du dispositif d'adaptation (2), la demande d'initiation de configuration comprenant une clé de session ;
dans lequel la demande d'initiation de configuration comprend un identifiant de dispositif auditif et un index partagé qui contribue à l'identification d'un secret commun partagé avec le dispositif auditif, et dans lequel le procédé comprend :
- la génération (S202) de matériel de clé de configuration basé sur la clé de session ;
- la génération (S203) de matériel d'authentification de configuration, dans lequel la génération (S203) du matériel d'authentification de configuration comprend :
- l'obtention (S203a) d'une clé de certificat basée sur l'identifiant du dispositif auditif ; dans lequel l'obtention d'une clé de certificat basée sur l'identifiant du dispositif auditif comprend la récupération du secret commun depuis un module de mémoire du dispositif serveur, ou le calcul de la clé de certificat qui est le résultat d'une fonction de hachage prenant en entrée une chaîne de caractères et le secret commun ;
- l'obtention (S203b) d'un certificat de distributeur à l'aide d'un identifiant de distributeur ;
- le chiffrement (S203c) du certificat de distributeur à l'aide de la clé de certificat ; et
- l'inclusion (S203d) du certificat de distributeur chiffré dans le matériel d'authentification de configuration ;
- la transmission (S204) d'une réponse d'initiation de configuration au dispositif d'adaptation (2), la réponse d'initiation de configuration comprenant le matériel de clé de configuration ;
- la réception (S205) d'un paquet de configuration en provenance du dispositif d'adaptation (2), le paquet de configuration comprenant un bloc de charge utile de configuration et un bloc de contrôle ;
- le calcul (S206) d'un ensemble d'indicateurs d'intégrité basé sur le bloc de charge utile de configuration et le bloc de contrôle ;
- la génération (S207) d'un bloc de configuration basé sur au moins une partie de l'ensemble d'indicateurs d'intégrité ;
- la génération (S208) d'un paquet de vérification de configuration basé sur le bloc de configuration ;
- la génération (S209) d'un paquet d'authentification de configuration basé sur le matériel d'authentification de configuration ; et
- la transmission (S210) du paquet de configuration, du paquet de vérification de configuration et du paquet d'authentification de configuration.

2. Procédé selon la revendication 1, dans lequel la génération (S202) du matériel de clé de configuration basé sur la clé de session comprend le chiffrement (S202a) d'une clé de session de configuration à l'aide de la clé de session et l'inclusion de la clé de session de configuration chiffrée dans le matériel de clé de configuration.

3. Procédé selon l'une quelconque des revendications 1 à 2, le procédé comprenant la réception (S2021) d'une demande d'accès au niveau du dispositif serveur (4), la demande d'accès comprenant l'identifiant du distributeur, et l'envoi (S2022) d'une réponse d'accès au dispositif d'adaptation (2).

4. Procédé selon l'une quelconque des revendications 1 à 3, le procédé comprenant l'obtention (S2071) d'une première signature numérique sur le bloc de configuration ; et la génération d'un paquet de vérification de configuration étant basée sur la première signature numérique.

5. Procédé selon l'une quelconque des revendications 1 à 4, le procédé comprenant l'obtention (S2081) d'une deuxième signature numérique sur le matériel d'authentification de configuration ; et dans lequel la génération d'un paquet d'authentification de configuration est basée sur la deuxième signature.

6. Procédé selon l'une quelconque des revendications 1 à 5, dans lequel la réception (S205) du paquet de configuration en provenance du dispositif d'adaptation (2) comprend le déchiffrement (S205a) des données du paquet de configuration à l'aide de la clé de session.

7. Procédé, exécuté par un système audiologique (1), pour la configuration à distance d'un dispositif auditif (8) dans le système audiologique (1), le système audiologique (1) comprenant le dispositif auditif (8), un dispositif d'adaptation (2), un dispositif accessoire (10) et un dispositif serveur (4), le procédé comprenant les étapes du procédé selon l'une quelconque des revendications 1 à 6, exécutées par le dispositif serveur (4) du système audiologique, de sorte que le procédé exécuté par le système audiologique comprend :
- l'obtention (S101), au niveau du dispositif d'adaptation (2), de données du dispositif auditif comprenant un identifiant du dispositif auditif ;
- l'obtention (S102), au niveau du dispositif d'adaptation (2), d'une clé de session ;
- la génération (S103), au niveau du dispositif d'adaptation (2), d'une demande d'initiation de configuration basée sur la clé de session et l'identifiant du dispositif auditif ;
- la transmission (S104) de la demande d'initiation de configuration depuis le dispositif d'adaptation (2) vers le dispositif serveur, la demande d'initiation de configuration comprenant l'identifiant du dispositif auditif, la clé de session et un index partagé qui contribue à l'identification d'un secret commun partagé avec le dispositif auditif ;
- la génération (S202), au niveau du dispositif serveur (4), de matériel de clé de configuration basé sur la clé de session ;
- la génération (S203), au niveau du dispositif serveur (4), de matériel d'authentification de configuration, dans lequel la génération (S203) du matériel d'authentification de configuration comprend :
- l'obtention (S203a) d'une clé de certificat basée sur l'identifiant du dispositif auditif ; dans lequel l'obtention d'une clé de certificat basée sur l'identifiant du dispositif auditif comprend la récupération du secret commun depuis un module de mémoire du dispositif serveur, ou le calcul de la clé de certificat qui est le résultat d'une fonction de hachage prenant en entrée une chaîne de caractères et le secret commun ;
- l'obtention (S203b) d'un certificat de distributeur à l'aide d'un identifiant de distributeur ;
- le chiffrement (S203c) du certificat de distributeur à l'aide de la clé de certificat ; et
- l'inclusion (S203d) du certificat de distributeur chiffré dans le matériel d'authentification de configuration ;
- la réception (S105), au niveau du dispositif d'adaptation (2), d'une réponse d'initiation de configuration en provenance du dispositif serveur (4), la réponse d'initiation de configuration comprenant du matériel de clé de configuration ;
- la génération (S106), au niveau du dispositif d'adaptation (2), d'un paquet de configuration basé sur les données de configuration du dispositif auditif et sur le matériel de clé de configuration, le paquet de configuration comprenant des données de paquet de configuration, dans lequel la génération (S106) du paquet de configuration comprend le chiffrement (S106b) des données de configuration à l'aide du matériel de clé de configuration, et dans lequel les données du paquet de configuration incluent les données de configuration chiffrées ;
- la réception (S205), au niveau du dispositif serveur (4), du paquet de configuration en provenance du dispositif d'adaptation (2), le paquet de configuration comprenant un bloc de charge utile de configuration et un bloc de contrôle ; dans lequel la réception (S205), au niveau du dispositif serveur (4), du paquet de configuration en provenance du dispositif d'adaptation (2) comprend le déchiffrement (S205a), au niveau du dispositif serveur (4), des données du paquet de configuration à l'aide de la clé de session ;
- le calcul (S206), au niveau du dispositif serveur (4), d'un ensemble d'indicateurs d'intégrité basé sur le bloc de charge utile de configuration et le bloc de contrôle ;
- la génération (S207), au niveau du dispositif serveur (4), d'un bloc de configuration basé sur au moins une partie de l'ensemble d'indicateurs d'intégrité ;
- la génération (S208), au niveau du dispositif serveur (4), d'un paquet de vérification de configuration basé sur le bloc de configuration ;
- la génération (S209), au niveau du dispositif serveur (4), d'un paquet d'authentification de configuration basé sur le matériel d'authentification de configuration ;
- la transmission (S210), au dispositif accessoire (10), du paquet de configuration, du paquet de vérification de configuration et du paquet d'authentification de configuration (612) depuis le dispositif serveur (4) ;
- la vérification, au niveau du dispositif accessoire (10), du paquet de configuration et du paquet d'authentification de configuration à l'aide du paquet de vérification de configuration ; et
- la transmission, depuis le dispositif accessoire (10) vers le dispositif auditif (8), du paquet de configuration et du paquet d'authentification de configuration.

8. Procédé selon la revendication 7, dans lequel la génération (S103), au niveau du dispositif d'adaptation (2), de la demande d'initiation de configuration comprend le chiffrement (S103a), au niveau du dispositif d'adaptation (2), de la clé de session à l'aide d'une clé publique d'initiation de configuration et l'inclusion de la clé de session chiffrée dans la demande d'initiation de configuration.

9. Procédé selon l'une quelconque des revendications 7 à 8, dans lequel les données du dispositif auditif comprennent un index partagé, un identifiant de clé de dispositif d'adaptation, un identifiant d'adresse et/ou des informations d'adaptation.

10. Procédé selon l'une quelconque des revendications 7 à 9, dans lequel la réception (S105) de la réponse d'initiation de configuration comprend le déchiffrement (S105a), au niveau du dispositif d'adaptation (2), du matériel de clé de configuration.

11. Procédé selon l'une quelconque des revendications 7 à 10, dans lequel la génération (S106), au niveau du dispositif d'adaptation (2), du paquet de configuration comprend le calcul (S106a) d'un indicateur d'intégrité des données de configuration basé sur les données de configuration, et dans lequel les données du paquet de configuration sont basées sur l'indicateur d'intégrité des données de configuration.

12. Procédé selon la revendication 11, dans lequel la génération (S106), au niveau du dispositif d'adaptation (2), du paquet de configuration comprend le chiffrement (S106b) de l'indicateur d'intégrité des données de configuration à l'aide du matériel de clé de configuration, et dans lequel les données du paquet de configuration sont basées sur l'indicateur d'intégrité des données de configuration chiffré.

13. Procédé selon la revendication 12, dans lequel les données du paquet de configuration comprennent un bloc de charge utile de configuration et un bloc de contrôle, et dans lequel le bloc de charge utile de configuration comprend les données de configuration chiffrées et l'indicateur d'intégrité des données de configuration chiffré.

14. Procédé selon l'une quelconque des revendications 7 à 13, dans lequel la génération (S106), au niveau du dispositif d'adaptation (2), du paquet de configuration comprend le chiffrement (S106c) des données du paquet de configuration.

15. Procédé selon l'une quelconque des revendications 7 à 14, le procédé comprenant l'envoi (S1021) d'une demande d'accès depuis le dispositif d'adaptation (2) vers le dispositif serveur (4) et la réception (1022), au niveau du dispositif d'adaptation (2), d'une réponse d'accès en provenance du dispositif serveur (4).

16. Procédé selon l'une quelconque des revendications 7 à 15, le procédé comprenant la suppression (S108), au niveau du dispositif d'adaptation (2), de la clé de session et du matériel de clé de configuration après la transmission du paquet de configuration.

17. Système audiologique comprenant :
- un dispositif d'adaptation (2) ;
- un dispositif serveur (4) ;
dans lequel le système audiologique est configuré pour exécuter l'une quelconque des revendications 7 à 16.

18. Dispositif serveur (4) comprenant :
- une unité de traitement (802) ;
- une unité de mémoire (801) ; et
- une interface (803) ;
dans lequel le dispositif serveur (4) est configuré pour exécuter l'une quelconque des revendications 1 à 6.
